# EUROPÄISCHE PATENTSCHRIFT

(11) **EP 2 928 753 B1**
(45) Veröffentlichungstag und Bekanntmachung des Hinweises auf die Patenterteilung: **21.02.2018**
(21) Anmeldenummer: 13779126.5
(22) Anmeldetag: 18.09.2013
(51) Int. Cl.: B62D 1/184, B62D 1/185, F16C 29/10

(54) **VORRICHTUNG ZUR FÜHRUNG EINES KÖRPERS UND LENKSÄULE FÜR EIN KRAFTFAHRZEUG**
DEVICE FOR GUIDING A BODY AND STEERING COLUMN FOR A MOTOR VEHICLE
DISPOSITIF POUR GUIDER UN CORPS ET COLONNE DE DIRECTION POUR UN VÉHICULE AUTOMOBILE

(30) Priorität: 10.12.2012 DE 102012024037
(43) Veröffentlichungstag der Anmeldung: 14.10.2015
(73) Patentinhaber: ThyssenKrupp Presta AG, 9492 Eschen (LI); thyssenkrupp AG, 45143 Essen (DE)
(72) Erfinder: GEISELBERGER, Thomas, Carmel, IN-46032 (US); HAHN, Michael, 9434 Au (SG) (CH); FLEISCHER, Martin, 9436 Balgach (CH)
(74) Vertreter: thyssenkrupp Intellectual Property GmbH
(86) Internationale Anmeldenummer: PCT/EP2013/002813
(87) Internationale Veröffentlichungsnummer: WO 2014/090348

(56) Entgegenhaltungen:
- EP-A2- 1 870 309
- US-A1- 2004 104 565

## Beschreibung

Die vorliegende Erfindung betrifft eine Vorrichtung zur Führung eines Körpers nach dem Oberbegriff des Anspruchs 1.

Insbesondere aus dem Bereich verstellbarer Lenksäulen von Kraftfahrzeugen ist es bekannt, Gleitführungen aus Kunststoff mit einem die Führung quer durchgreifenden Bolzen vorzusehen. Bei verstellbaren Lenksäulen ist der Führungskasten, bestehend aus Mantelrohr mit Lenkspindel, durch eine Gleitführung mit einer Konsole am Querträger im Fahrzeug verbunden. Die Lenksäule lässt sich dabei mit einer formschlüssigen Verriegelung in eine gesicherte Position bringen. Um das Gewicht des Lenkrades, welches am Ende der Lenkspindel montiert ist, zu kompensieren, ist eine Feder zum Ausgleich des Gewichts vorgesehen, beispielsweise auf beiden Seiten der Gleitführung jeweils eine Metallfeder.

Beim unsachgemäßen Öffnen der Lenksäulenverriegelung ohne Lenkrad oder Ersatzmasse schnellt der Führungskasten durch die Federkraft der Feder nach oben. Dabei wird die Längsführung der verstellbaren Lenksäule beschädigt. Weitere Beschädigungen können durch das Öffnen der Verriegelung erfolgen, wenn sich der Fahrer während des Öffnens auf dem Lenkrad abstützt.
Das hat zur Folge, dass durch die Beschädigung der Führung die Verschiebekraft zur Bewegung des Lenkrads variiert und eine Verschlechterung der Beweglichkeit spürbar ist.
Endseitige Anschlagsdämpfungen eines Bolzens in einer Gleitführung sind aus der EP 1 870 309 A2 und EP 1 420 994 B1 bekannt. In beiden Schriften sind Ausführungsformen beschrieben, bei denen die Dämpfungsmittel an die Endbereiche des Führungselements angebracht sind. Das führt dazu, dass der Endanschlag in Führungsrichtung gedämpft wird. Belastungen hingegen die quer zur Führungsrichtung auftreten, können dabei nicht gedämpft werden. Die EP 1 870 309 A2 offenbart eine Vorrichtung zur Führung eines Körpers gemäß dem Oberbegriff des Anspruchs 1. Es ist die Aufgabe der Erfindung, eine Vorrichtung zur Führung eines Körpers anzugeben, bei der Beschädigungen der Längsführung durch unsachgemäße Bedienung oder Öffnen und Schließen weitgehend verhindert werden.
Diese Aufgabe wird für eine eingangs genannte Vorrichtung erfindungsgemäß mit den kennzeichnenden Merkmalen des Anspruchs 1 gelöst.
Danach ist die Vorrichtung zur Führung eines Körpers mit einer ersten Führungswand und einer zweiten Führungswand, die parallel und in einem Abstand zu der ersten Führungswand angeordnet ist, wobei die erste Führungswand und die zweite Führungswand an einem Ende über ein erstes Kopfstück und bevorzugt auch an einem anderen Ende über ein zweites Kopfstück derart miteinander verbunden sind, dass die Führungswände und mindestens ein Kopfstück eine Führungsöffnung begrenzen, wobei die Führungsöffnung von einer im Wesentlichen ebenen Stirnseite einerseits und von einer Rückseite andererseits umrandet ist, und wobei die Führungswände aufeinander zu weisende, die Führungsöffnung umfangsseitig umgebende und bezüglich der Führungsöffnung nach innen gerichtete Oberflächen aufweisen, mit wenigstens einer parallel zu der Ebene der Stirnseite ausgerichteten Lasche mit einer Materialdicke, die einen Rasthaken trägt, wobei gemessen von der Lasche der Rasthaken einen Abstand aufweist, so dass der Abstand des Rasthakens von der Stirnseite der Summe des Abstands und der Materialdicke entspricht, der zur Sicherung der Vorrichtung an einem Tragteil durch Aufnahme einer Wandung des Tragteils eingerichtet ist, wobei die nach innen gerichteten Oberflächen der Führungswände jeweils eine Gleitfläche aufweisen, wobei der Abstand der Gleitflächen voneinander die lichte Weite der Führungsöffnung bestimmt, und dass ein Abstand der Gleitflächen von der Stirnseite wenigstens 75% des oben genannten Abstands des Rasthakens von der Stirnseite aufweist. Der Abstand bildet mit anderen Worten die Montagetiefe mit der die Vorrichtung zur Führung mit seinen Rasthaken in ein Tragteil eingefügt werden kann.

Die im wesentlichen ebenen Stirnseiten könnten dabei eben im technischen Sinne ausgebildet sein, oder aber Längsrillen oder Längsstege aufweisen, die parallel zur Führungsöffnung ausgerichtet sind, wobei die erhabenen Stege in einer Ebene liegen.

Bevorzugt ist eine Vorrichtung zur Führung eines Körpers mit einer ersten Führungswand und einer zweiten Führungswand, die parallel und in einem Abstand zu der ersten Führungswand angeordnet ist, wobei die erste Führungswand und die zweite Führungswand an einem Ende über ein erstes Kopfstück und an einem anderen Ende über ein zweites Kopfstück derart miteinander verbunden sind, dass die Führungswände und die Kopfstücke eine Führungsöffnung begrenzen, wobei die Führungsöffnung von einer im Wesentlichen ebenen Stirnseite einerseits und von einer Rückseite andererseits umrandet ist, und wobei die Führungswände aufeinander zu weisende, die Führungsöffnung umfangsseitig umgebende und bezüglich der Führungsöffnung nach innen gerichtete Oberflächen aufweisen, mit wenigstens einer Lasche mit einer Materialdicke, die einen Rasthaken trägt, wobei zwischen der Lasche und einer Hinterschneidung des Rasthakens ein Abstand liegt, so dass der Abstand der Hinterschneidung des Rasthakens von der Stirnseite der Summe des Abstands und der Materialdicke entspricht, der zur rastenden Sicherung der Vorrichtung an einem Tragteil durch Aufnahme einer Wandung des Tragteils eingerichtet ist, vorgesehen, bei der die nach innen gerichteten Oberflächen der Führungswände jeweils eine Gleitfläche aufweisen, wobei der Abstand der Gleitflächen voneinander die lichte Weite der Führungsöffnung bestimmt, und dass ein Abstand der Gleitflächen von der Stirnseite wenigstens 75% des Abstands der Hinterschneidung des Rasthakens von der Stirnseite aufweist.

In vorteilhafter Ausgestaltung weisen die Gleitflächen einen über ihre Längserstreckung konstanten Abstand voneinander auf, so dass ein dazwischen geführter Körper mit konstanter Reibung entlang der Führungsrichtung zwangsgeführt wird. Da bevorzugt der Körper durch die gegenüberliegenden Gleitflächen an die Gleitflächen mit nur geringer Kraft gepresst wird, ist die Reibung zwischen Körper und Gleitflächen relativ gering. Die Kraft, mit der der Körper zwischen den Gleitflächen gepresst wird, ist bei der Konstruktion so niedrig wie möglich auszulegen, wobei eine sichere Gleitführung gewährleistet werden muss.

In bevorzugter Weiterbildung weist die Vorrichtung Führungswände auf, die so ausgebildet sind, dass bei einer Belastung senkrecht zu den Gleitflächen sich die belastete Führungswand im Bereich der Gleitfläche elastisch nach außen von dem geführten Körper weg verformt. Dadurch können die Belastungen außerhalb der Gleitflächen durch die beanspruchte Führungswand abgefangen werden, so dass die Beschädigung der Führung größten Teils vermieden werden kann.

In allgemein vorteilhafter Ausgestaltung ist die Weite der Führungsöffnung an der Stirnseite der Vorrichtung größer als die Weite an der Rückseite, wobei die Weite der Rückseite der Vorrichtung so gewählt ist, dass die von der Rückseite nach innen gerichteten Oberflächen der Führungswände die Gleitflächen bilden und wobei zwischen der Weite an der Stirnseite und der Weite im Bereich der Gleitflächen ein Übergangsbereich vorgesehen ist.

Weiterhin bevorzugt ist, dass die von der Rückseite der Vorrichtung her nach innen gerichteten Oberflächen der Führungswände in dem Übergangsbereich einen Rücksprung aufweisen.

Weiterhin vorteilhaft ist, dass der Übergangsbereich parallel zu der Stirnseite ausgerichtet ist.

Allgemein bevorzugt umfasst die Vorrichtung Rasthaken, die dazu eingerichtet sind, die Vorrichtung in das Tragteil einzuclipsen.

Weiterhin bevorzugt besitzt der Abstand von dem Rücksprung bis zu der Stirnseite der Vorrichtung wenigstens eine Tiefe, die 75% des oben definierten Abstands, der bevorzugt dem Abstand zwischen der Hinterschneidung des Rasthakens von der Stirnseite entspricht.

In einem bevorzugten zweiten Ausführungsbeispiel weist die Vorrichtung im Übergangsbereich eine Abschrägung auf, die sich bis zur Stirnseite der Vorrichtung erstreckt oder deren Tiefe wenigstens 75% des oben definierten Abstands, der bevorzugt dem Abstand der Hinterschneidung des Rasthakens von der Stirnseite entspricht. Bei Belastung senkrecht zu den Gleitflächen einer Führungswand kann somit die anliegende Kraft von der Abschrägung, einer relativ großen Fläche, aufgenommen werden, so dass die Beschädigung der Führung größten Teils vermieden werden kann.

Weiterhin kann die erfindungsgemäße Vorrichtung Teil einer Lenksäule eines Kraftfahrzeugs sein.

Wobei die Vorrichtung in einer Ausführungsform in ein Gehäuse aufgenommen ist, welches einen oberen Teil einer Lenkwelle drehbar lagert, und wobei die Vorrichtung von einer Spannachse durchgriffen wird, so dass über einen teleskopischen Eingriff der obere Teil der Lenkwelle gegenüber einem unterem Teil der Lenkwelle bewegt werden kann, so dass die Lenksäule insgesamt in ihrer Länge verstellbar ist.

Weitere Vorteile und Merkmale der Erfindung ergeben sich aus den nachfolgend beschriebenen Ausführungsbeispielen sowie aus den abhängigen Ansprüchen.

Nachfolgend werden zwei bevorzugte Ausführungsbeispiele einer Lenksäule mit einer daran vorgesehenen erfindungsgemäßen Vorrichtung beschrieben und anhand der anliegenden Zeichnungen näher erläutert.

Es zeigen:
- Fig. 1: eine räumliche Ansicht einer erfindungsgemäßen Vorrichtung,
- Fig. 2: eine Draufsicht auf die Vorrichtung aus Fig. 1 von oben,
- Fig. 3: einen Querschnitt der Vorrichtung aus Fig. 2 entlang der Linie A-A,
- Fig. 4a: einen Längsschnitt der Vorrichtung aus Fig. 2 entlang der Linie B-B,
- Fig. 4b: einen Längsschnitt einer Vorrichtung entsprechend Fig. 2 entlang der Linie B-B, allerdings in der anderen Ausführungsform,
- Fig. 5: die Ansicht aus Fig. 3 mit einem geführten Körper,
- Fig. 6: die Ansicht aus Fig. 3 mit einem geführten Körper auf dem von oben eine Kraft ausgeübt wird,
- Fig. 7: eine räumliche Ansicht einer weiteren Ausführungsform der Erfindung,
- Fig. 8: eine Draufsicht auf die Vorrichtung aus Fig. 7 von oben,
- Fig. 9: einen Querschnitt der Vorrichtung aus Fig. 7 entlang der Linie C-C,
- Fig. 10: einen Längsschnitt der Vorrichtung aus Fig. 7 entlang der Linie D-D,
- Fig. 11: die Ansicht aus Fig. 9 mit einem geführten Körper,
- Fig. 12: die Ansicht aus Fig. 9 mit einem geführten Körper in einem anderen Ausführungsbeispiel,
- Fig. 13: die Ansicht aus Fig. 12 mit dem Stand der Technik,
- Fig. 14: eine schematische Darstellung einer verstellbaren Lenksäule,
- Fig. 15: eine schematische Darstellung eines Gehäuses mit einer Vorrichtung, sowie
- Fig. 16: einen Querschnitt eines Gehäuses mit einer Vorrichtung.

Sämtliche der Zeichnungen sind maßgerecht, so dass sich insbesondere den ebenen Ansichten Maßverhältnisse der bevorzugten Ausführung entnehmen lassen.

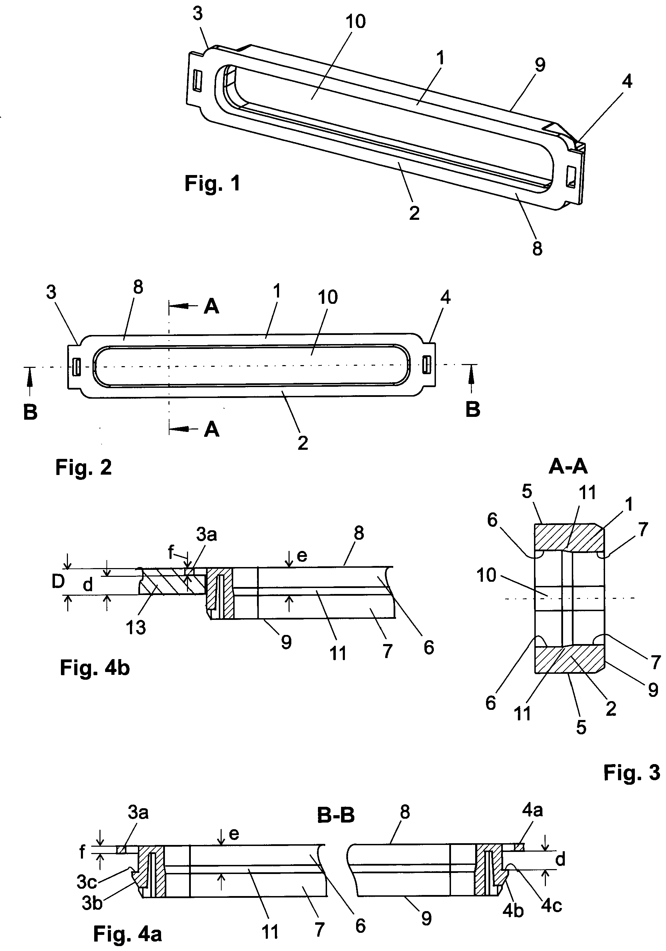

In der Fig. 1 ist eine Vorrichtung zur Führung eines Körpers, die als einstückiges Kunststoff-Spritzgussteil ausgebildet ist, dargestellt. Die Vorrichtung hat eine erste Führungswand 1 und eine zweite, parallel dazu angeordnete Führungswand 2, wobei die Führungswände 1, 2 endseitig jeweils über ein erstes Kopfstück 3 und ein zweites Kopfstück 4 miteinander verbunden sind. Die Führungswände 1, 2 weisen jeweils eine nach außen gerichtete Oberfläche 5 und eine nach innen gerichtete Oberfläche 6 auf, wobei die nach innen gerichteten Oberflächen 6 der Führungswände jeweils eine Gleitfläche 7 bilden, auf denen der Körper in der Vorrichtung geführt wird. Die Führungswände 1, 2 und die Kopfstücke 3, 4 bilden eine in einer gemeinsamen Ebene liegende Stirnseite 8. Der Stirnseite 8 gegenüber liegt eine in Fig. 1 nicht sichtbare Rückseite 9. Zwischen den Führungswänden 1, 2 und den Kopfstücken 3, 4 ist eine längliche Führungsöffnung 10 in der Stirnseite 8 ausgebildet.

Fig. 2 zeigt die Stirnseite 8 der Vorrichtung.

Fig. 3 zeigt den Querschnitt der Vorrichtung entlang der Linie A-A aus Fig. 2. Die nach innen gerichteten Oberflächen 6 der Führungswände 1 und 2 weisen von der Rückseite 9 der Vorrichtung ausgehend einen Rücksprung 11 auf, der sich über einen Abstand e von der Stirnseite 8 der Vorrichtung aus erstreckt. Die lichte Weite der Führungsöffnung 10 entspricht dabei mit geringem Spiel dem Durchmesser des geführten Körpers. Die Weite der Führungsöffnung 10 an der Stirnseite 8 der Vorrichtung ist gegenüber der Weite an der Rückseite 9 erweitert. Der Bereich der nach innen gerichteten Oberflächen 6, der sich von der Rückseite 9 der Vorrichtung aus bis zum Rücksprung 11 erstreckt, bildet die Gleitflächen 7, auf denen der Körper in der Vorrichtung geführt wird.

Der Längsschnitt der Vorrichtung entlang der Linie B-B aus Fig. 2 ist in Fig. 4a gezeigt. Die Kopfstücke 3, 4 weisen jeweils eine parallel zu der Ebene der Stirnseite 8 ausgerichtete Lasche 3a, 4a mit einer Materialdicke f und einen Rasthaken 3b, 4b auf, der etwa senkrecht zur Ebene der Führungsöffnung 10 steht und der das Einclipsen der Vorrichtung in ein hier nicht dargestelltes Tragteil ermöglicht. Zudem sind in den Laschen 3a, 4a jeweils Aussparungen vorgesehen. Diese Aussparungen dienen zur vereinfachten Demontage der Vorrichtung. Die dem Rasthaken 3b, 4b zugewandte Seite der Laschen 3a, 4a weist einen Abstand d zu einer Hinterschneidung 3c, 4c des Rasthakens 3b, 4b auf. Die Summe des Abstands d und der Materialdicke f der Lasche 3a, 4a entspricht gerade einer Materialdicke D des Tragteils, in das die Vorrichtung mit Hilfe der Rasthaken 3b, 4b eingeclipst wird. Prinzipiell ist es denkbar und möglich, die Vorrichtung zur Führung ohne Rasthaken mit Hinterschneidungen auszubilden, wie dies in Fig. 4b veranschaulicht ist. Am Rasthaken, der überhaupt nicht einrasten muss, ist eine Länge, der Abstand d, vorgesehen, mit der er in ein Tragteil eingefügt werden kann. Zur Veranschaulichung des Abstandes d ist in der Fig. 4b noch ein Stück des Tragteils 13 dargestellt. Als Abstand d ist dann die Montagetiefe, mit der die Vorrichtung in das in den weiteren Darstellungen gezeigte Tragteil 13 eingefügt ist, zu sehen. Zur sicheren Montage sind jedoch Rasthaken mit Hinterschneidungen, wie sie in Fig. 4a veranschaulicht sind, zu bevorzugen.

Die Lage des Rücksprungs 11 der Führungswände 1, 2 ist definiert über die Summe des Abstands d und der Materialdicke f der Lasche 3a, 4a. Dabei erstreckt sich der Bereich des Abstands e, bei dem der Abstand zwischen den nach innen gerichteten Oberflächen 6 größer ist, als der des Durchmessers des geführten Körpers, wenigstens über den Abstand der Summe des Abstands d und der Materialdicke f der Lasche 3a, 4a. Die nach innen gerichtete Oberfläche 6 vom Rücksprung 11 bis zur Stirnseite 8 der Vorrichtung ist parallel versetzt zur Gleitfläche 7 angeordnet. Die Weite der Führungsöffnung 10 an der Stirnseite 8 der Vorrichtung ist dabei so zu wählen, dass die Führungswände 1,2 eine Restdicke aufweisen, die die Stabilität des Bauteils garantiert und den Fertigungsprozess nicht nachteilig beeinflusst.

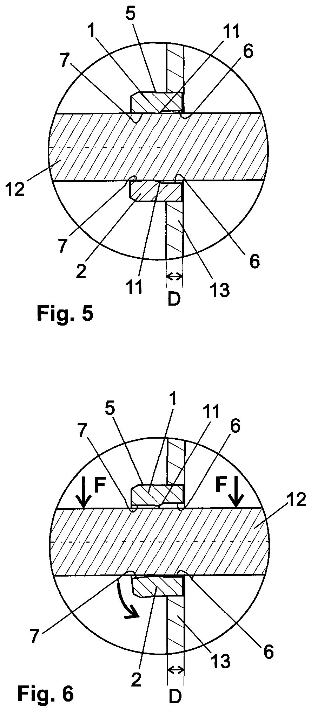

Die Fig. 5 zeigt wie die Führungsöffnung 10 zwischen den Führungswänden 1, 2 vollständig von dem geführten Körper 12 durchgriffen wird. Der geführte Körper 12 erstreckt sich senkrecht zu der durch die Führungswände 1, 2 begrenzten Führungsöffnung 10. Die Vorrichtung ist dabei mit einem Tragteil 13 verbunden, welches die Materialdicke D aufweist.

In Fig. 6 ist das Auftreten einer kurzzeitigen Belastung quer zur Vorrichtung, von oben dargestellt. Die untere Führungswand 2 im Bereich der Gleitfläche 7 verformt sich elastisch nach unten und die Kraft der Belastung wird von der Kante des Rücksprungs 11 aufgenommen. Nach Ende der Belastung kehrt die Führungswand 2 wieder in ihre Ausgangsstellung zurück.

Die auftretenden Kräfte an der Kante können zu einer plastischen Verformung des Bauteils an dieser Stelle führen. Dabei bleibt aber die Gleitfläche 7 unbeschädigt, so dass der geführte Körper 12 ohne Einschränkungen innerhalb der Führungsöffnung 10 geführt werden kann.

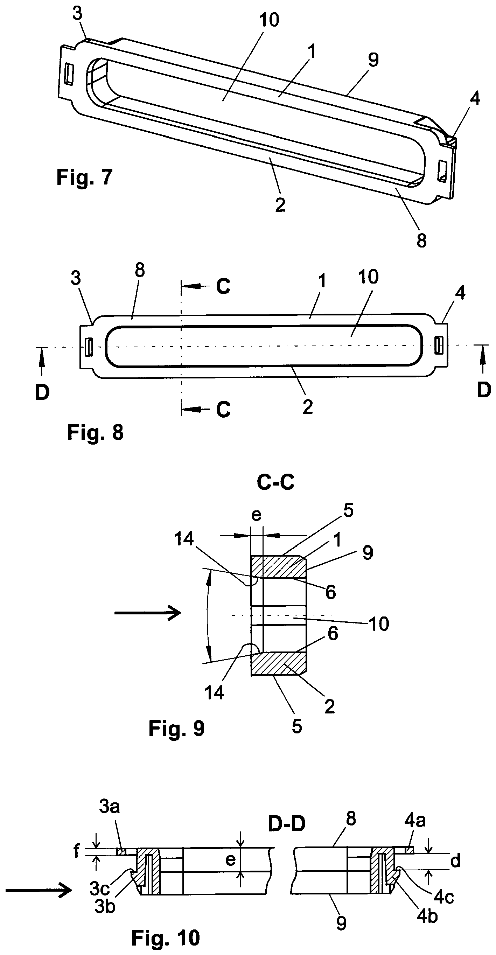

Eine zweite Ausführungsform der Erfindung ist in den Fig. 7 bis Fig. 12 gezeigt, wobei gleiche Bauelemente gleiche Bezugsziffern tragen.

Dabei ist in der Fig. 7 ebenfalls eine Vorrichtung zur Führung eines Körpers, die als einstückiges Kunststoff-Spritzgussteil ausgebildet ist, dargestellt. Die Vorrichtung hat eine erste Führungswand 1 und eine zweite, parallel dazu angeordnete Führungswand 2, wobei die Führungswände 1, 2 endseitig jeweils über ein erstes Kopfstück 3 und ein zweites Kopfstück 4 miteinander verbunden sind. Die Führungswände 1, 2 weisen jeweils eine nach außen gerichtete Oberfläche 5 und eine nach innen gerichtete Oberfläche 6 auf, wobei die nach innen gerichteten Oberflächen 6 der Führungswände jeweils eine Gleitfläche 7 bilden, auf denen der Körper in der Vorrichtung geführt wird. Die Führungswände 1, 2 und die Kopfstücke 3, 4 bilden eine in einer gemeinsamen Ebene liegende Stirnseite 8. Der Stirnseite 8 gegenüber liegt eine in Fig. 7 nicht sichtbare Rückseite 9. Zwischen den Führungswänden 1, 2 und den Kopfstücken 3, 4 ist eine längliche Führungsöffnung 10 ausgebildet.

Fig. 8 zeigt die Stirnseite 8 der Vorrichtung gemäß der zweiten Ausführungsform.

Fig. 9 zeigt den Querschnitt der Vorrichtung gemäß der zweiten Ausführungsform entlang der Linie C-C aus Fig. 8. Die nach innen gerichteten Oberflächen 6 der Führungswände 1, 2 weisen von der Rückseite 9 der Vorrichtung ausgehend eine Erweiterung der Öffnung 10 auf. Die Weite der Führungsöffnung 10 an der Rückseite 9 der Vorrichtung entspricht dabei mit geringem Spiel dem Durchmesser des geführten Körpers, dieser Bereich stellt die Gleitflächen 7 dar, auf denen der Körper in der Vorrichtung geführt wird. Die Weite der Führungsöffnung 10 an der Stirnseite 8 der Vorrichtung ist gegenüber der Weite der Rückseite 9 erweitert.

Die Erweiterung der Öffnung 10 erfolgt durch eine Abschrägung 14, die sich an die zur Rückseite 9 der Vorrichtung hin liegenden Gleitflächen 7 anschließt und einen Abstand e von der Gleitfläche 7 bis zur Stirnseite 8 der Vorrichtung aufweist.

Der Längsschnitt der Vorrichtung entlang der Linie D-D aus Fig. 8 ist in Fig. 10 gezeigt. Die Kopfstücke 3, 4 weisen jeweils eine parallel zu der Ebene der Stirnseite 8 ausgerichtete Lasche 3a, 4a mit einer Materialdicke f und einen Rasthaken 3b, 4b auf, der etwa senkrecht zur Ebene der Führungsöffnung 10 steht und der das Einclipsen der Vorrichtung in ein hier nicht dargestelltes Tragteil ermöglicht. Zudem sind in den Laschen 3a, 4a jeweils Aussparungen vorgesehen. Diese Aussparungen dienen zur vereinfachten Demontage der Vorrichtung. Die dem Rasthaken 3b, 4b zugewandte Seite der Laschen weist auch bei dieser Ausführungsform einen Abstand d zur Hinterschneidung 3c, 4c des Rasthakens 3b, 4b auf. Die Summe des Abstands d und der Materialdicke f der Lasche 3a, 4a entspricht ebenfalls gerade der Materialdicke D des Tragteils, in das die Vorrichtung mit Hilfe der Rasthaken 3b, 4b eingeclipst wird.

Das Abmaß der Abschrägung 14 der Führungswände 1, 2 ist definiert über die Summe des Abstands d und der Materialdicke f der Lasche 3a, 4a. Dabei erstreckt sich der Bereich der Abschrägung über den Abstand e, bei dem der Abstand zwischen den nach innen gerichteten Oberflächen 6 größer ist, als der des Durchmessers des geführten Körpers und der wenigstens eine Länge der Summe des Abstands d und der Materialdicke f der Lasche 3a, 4a aufweist. Der Winkel der Abschrägung 14 ist dabei variabel. Allerdings sollten die Führungswände 1, 2 zur Stirnseite 8 hin eine Restdicke aufweisen, die die Stabilität des Bauteils garantiert und den Fertigungsprozess nicht nachteilig beeinflusst.

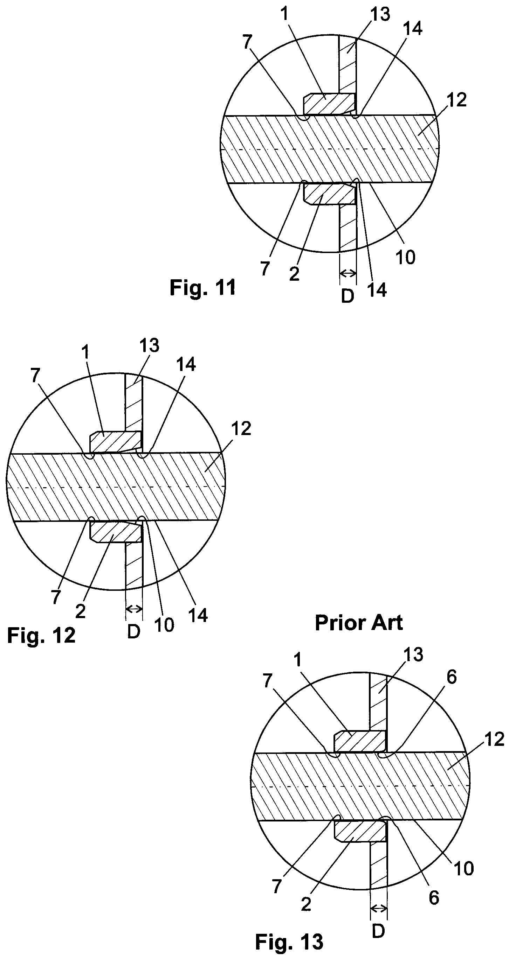

Die Fig. 11 und 12 zeigen wie die Führungsöffnung 10 zwischen den Führungswänden 1, 2 vollständig von dem geführten Körper 12 durchgriffen wird. Der geführte Körper 12 erstreckt sich senkrecht zu der durch die Führungswände 1, 2 begrenzten Führungsöffnung 10. Die Vorrichtung ist dabei mit einem Tragteil 13 verbunden, welches die Materialdicke D aufweist. Des Weiteren sind in dieser zweiten Ausführungsform zwei verschiedene Abschrägungen 14 mit unterschiedlichen Winkeln gezeigt.

Durch die Abschrägung 14 an den nach innen gerichteten Oberflächen 6 der Führungswände 1, 2 wird, im Gegensatz zur ersten Ausführungsform mit Rücksprung 11, bei Belastung die Kraft von einer größeren Fläche getragen und somit das Risiko der Beschädigung der Führung an den Gleitflächen 7 weiter minimiert.

Zum Vergleich zeigt Fig. 13 den Stand der Technik. Die nach innen gerichteten Oberflächen 6 der Führungswände 1, 2 können jeweils durch eine Ebene parallel zur Achse des geführten Körpers 12 beschrieben werden. Bei einer Belastung quer zur Vorrichtung wird die Führung beschädigt. Das hat zur Folge, dass die Kraft die zur Verschiebung des geführten Körpers 12 benötigt wird lokal variieren kann, was eine spürbare Verschlechterung der Bewegung hervorruft.

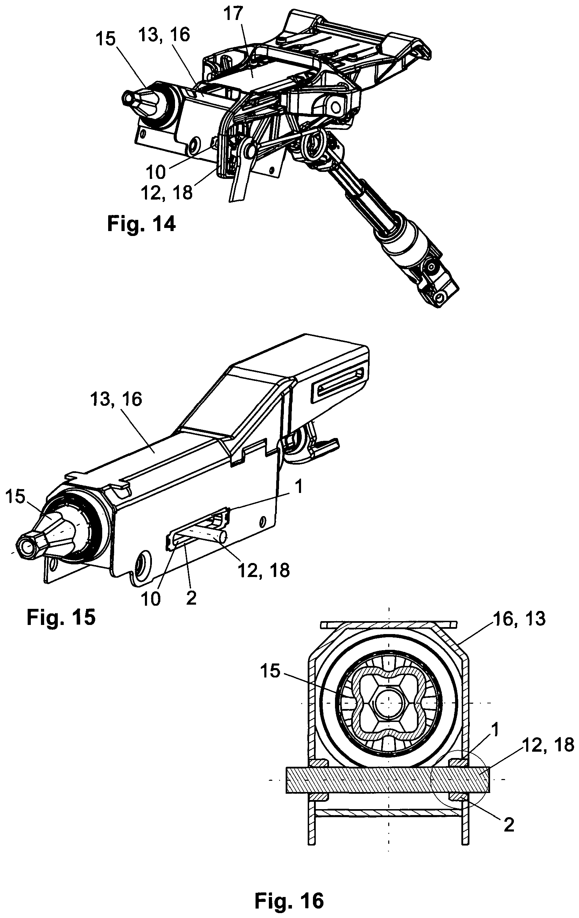

Fig. 14 zeigt eine räumliche Ansicht einer Lenksäule eines Kraftfahrzeugs, bei der eine Vorrichtung enthalten ist. Ein oberer Teil einer Lenkwelle 15 ist an einem Gehäuse 16 drehbar gelagert. Über einen teleskopischen Eingriff kann der obere Teil der Lenkwelle 15 in Richtung der Lenkwelle gegenüber einem unterem Teil 17 der Lenkwelle bewegt werden, so dass die Lenksäule insgesamt in ihrer Länge verstellbar ist.

Hierzu weist das Gehäuse 16 eine Öffnung zur Aufnahme einer Vorrichtung zur Führung eines Körpers auf, siehe Fig. 15. Das Gehäuse 16 entspricht daher dem Tragteil 13 und ist als Blech ausgebildet. Die Führungsöffnung 10 der Vorrichtung und das Gehäuse 16 werden von einer Spannachse 18 durchgriffen. Die Spannachse 18 entspricht dem zuvor beschriebenen geführten Körper 12.

Der Querschnitt in Fig. 16 des Gehäuses 16 zeigt die Anordnung der Spannachse 18, der Führungswände 1, 2 und des Gehäuses 16 zueinander. Die Vorrichtung mit den Führungswänden 1, 2 ist in der Öffnung 10 des Gehäuses angebracht, welches den oberen Teil der Lenkwelle 15 drehbar lagert. Die Spannachse 18 durchgreift das Gehäuse 16 durch die Führungsöffnung 10.

Die Spannachse 18 ist über einen Feststellhebel in ihrer axialen Richtung spannbar, wodurch sie über ein Verspannen der Trägerplatte gegen das Gehäuse 16 und/oder die Vorrichtung in ihrer wählbaren Position innerhalb der Führungsöffnung 10 fixierbar ist. Hierdurch wird zugleich die eingestellte Länge der Lenksäule fixiert. In der gelösten Stellung des Hebels kann die Lenkwelle 15 mit dem Gehäuse 16 gegenüber der bezüglich der Karosserie feststehenden Spannachse 18 verschoben werden.

Es versteht sich, dass bei der Vorrichtung ergänzend Endanschläge vorgesehen sein können. Diese Endanschläge bekannt aus der EP 1 870 309 A2 stellen eine zuverlässige endseitige Anschlagsdämpfung des geführten Körpers in der Führungsöffnung 10 mit einfachen Mitteln dar.

Des Weiteren versteht sich, dass in alternativer oder ergänzender Ausführung auch die Führungseinrichtung bzw. Vorrichtung zur Führung eines Körpers an einem fahrzeugfesten Halteteil integriert sein kann, an dem das verstellbare Lenksäulenteil lösbar festlegbar ist.

Weiterhin versteht sich, dass die Vorrichtung alternativ oder ergänzend bei einer Höhenverstellung der Lenksäule vorgesehen sein kann. Die in Fig. 14 gezeigte Lenksäule weist eine solche Höhenverstellung, die genauer eine Verstellung eines Neigungswinkels ist, wozu die Lenkwelle über ein Drehgelenk mit einem Träger verbunden ist und zudem ein kardanisches Gelenk aufweist. Insbesondere bei einer solchen Höhen- oder Neigungsverstellung der Lenksäule können die Führungswände 1, 2 auch im Wesentlichen einen gekrümmten Verlauf aufweisen, so dass der Körper 12 zum Beispiel auf dem Ausschnitt einer Kreisbahn geführt ist.

Insgesamt können an einer Lenksäule auch mehrere der Vorrichtungen bzw. Führungsmittel für insbesondere mehrere Verstellrichtungen vorgesehen sein.

### Bezugszeichen

- 1: erste Führungswand
- 2: zweite Führungswand
- 3: erstes Kopfstück
- 4: zweites Kopfstück
- 3a, 4a: Laschen
- 3b, 4b: Rasthaken
- 3c, 4c: Hinterschneidung des Rasthakens
- 5: nach außen gerichtete Oberfläche einer Führungswand
- 6: nach innen gerichtete Oberfläche einer Führungswand
- 7: Gleitfläche
- 8: Stirnseite der Vorrichtung
- 9: Rückseite der Vorrichtung
- 10: Führungsöffnung
- 11: Rücksprung
- 12: geführter Körper
- 13: Tragteil
- 14: Abschrägung
- 15: oberer Teil der Lenkwelle
- 16: Gehäuse
- 17: unterer Teil der Lenkwelle
- 18: Spannachse
- d: Abstand
- e: Abstand
- f: Materialdicke der Lasche
- D: Materialdicke des Tragteils

## Patentansprüche

1. Vorrichtung zur Führung eines Körpers mit
- einer ersten Führungswand (1) und
- einer zweiten Führungswand (2), die parallel und in einem Abstand zu der ersten Führungswand (1) angeordnet ist,
- wobei die erste Führungswand (1) und die zweite Führungswand (2) an einem Ende über ein erstes Kopfstück (3) derart miteinander verbunden sind, dass die Führungswände (1, 2) und mindestens ein Kopfstück (3, 4) eine Führungsöffnung (10) begrenzen, wobei die Führungsöffnung von einer im wesentlichen ebenen Stirnseite (8) einerseits und von einer Rückseite (9) andererseits umrandet ist, und
- wobei die Führungswände (1, 2) aufeinander zu weisende, die Führungsöffnung (10) umfangsseitig umgebende und bezüglich der Führungsöffnung (10) nach innen gerichtete Oberflächen (6) aufweisen,
- mit wenigstens einer parallel zu der Ebene der Stirnseite (8) ausgerichteten Lasche (3a, 4a) mit einer Materialdicke (f), die einen Rasthaken (3b, 4b) trägt, wobei gemessen von der Lasche (3a, 4a) der Rasthaken (3b, 4b) einen Abstand (d) aufweist, so dass der Abstand des Rasthakens (3b, 4b) von der Stirnseite (8) der Summe des Abstands (d) und der Materialdicke (f) entspricht, der zur Sicherung der Vorrichtung an einem Tragteil (13) durch Aufnahme einer Wandung des Tragteils (13) eingerichtet ist, **dadurch gekennzeichnet, dass**
- die nach innen gerichteten Oberflächen (6) der Führungswände (1, 2) jeweils eine Gleitfläche (7) aufweisen, wobei der Abstand der Gleitflächen (7) voneinander die lichte Weite der Führungsöffnung (10) bestimmt, und dass
- ein Abstand (e) der Gleitflächen (7) von der Stirnseite (8) wenigstens 75% des oben genannten Abstands (d) des Rasthakens (3b, 4b) von der Stirnseite (8) aufweist.

2. Vorrichtung nach Anspruch 1, **dadurch gekennzeichnet, dass** die Gleitflächen (7) einen über ihre Längserstreckung konstanten Abstand voneinander aufweisen, so dass ein dazwischen geführter Körper (12) mit konstanter Reibung entlang der Führungsrichtung zwangsgeführt wird.

3. Vorrichtung nach Anspruch 1 oder Anspruch 2, **dadurch gekennzeichnet, dass** die Führungswände (1, 2) so ausgebildet sind, dass bei einer Belastung senkrecht zu den Gleitflächen (7) sich die belastete Führungswand (1, 2) im Bereich der Gleitfläche (7) elastisch nach außen von dem geführten Körper (12) weg verformt.

4. Vorrichtung einem der vorhergehenden Ansprüche, **dadurch gekennzeichnet, dass** die Weite der Führungsöffnung (10) an der Stirnseite (8) der Vorrichtung größer ist als die Weite an der Rückseite (9), wobei die Weite der Rückseite (9) der Vorrichtung so gewählt ist, dass die von der Rückseite (9) nach innen gerichteten Oberflächen (6) der Führungswände (1, 2) die Gleitflächen (7) bilden und wobei zwischen der Weite an der Stirnseite (8) und der Weite im Bereich der Gleitflächen (7) ein Übergangsbereich vorgesehen ist.

5. Vorrichtung nach Anspruch 4, **dadurch gekennzeichnet, dass** die von der Rückseite (9) der Vorrichtung her nach innen gerichteten Oberflächen (6) der Führungswände (1, 2) in dem Übergangsbereich einen Rücksprung (11) aufweisen.

6. Vorrichtung nach Anspruch 4 oder 5, **dadurch gekennzeichnet, dass** der Übergangsbereich parallel zu der Stirnseite (8) ausgerichtet ist.

7. Vorrichtung nach einem der vorhergehenden Ansprüche, **dadurch gekennzeichnet, dass** die Rasthaken (3b, 4b) dazu eingerichtet sind, die Vorrichtung in das Tragteil (13) einzuclipsen.

8. Vorrichtung nach Anspruch 5, **dadurch gekennzeichnet, dass** der Abstand (e) von dem Rücksprung (11) bis zu der Stirnseite (8) der Vorrichtung wenigstens eine Tiefe besitzt, die 75% des Abstands (d) des Rasthakens (3b, 4b) von der Stirnseite (8) entspricht.

9. Vorrichtung nach Anspruch 4, **dadurch gekennzeichnet, dass** der Übergangsbereich eine Abschrägung (14) aufweist, die sich bis zur Stirnseite (8) der Vorrichtung erstreckt oder deren Tiefe wenigstens 75% des Abstands des Rasthakens (3b, 4b) von der Stirnseite (8) entspricht.

10. Vorrichtung nach einem der vorhergehenden Ansprüche, **dadurch gekennzeichnet, dass** die Vorrichtung Teil einer Lenksäule eines Kraftfahrzeugs ist.

11. Vorrichtung nach Anspruch 10, **dadurch gekennzeichnet, dass** die Vorrichtung in ein Gehäuse aufgenommen ist, welches einen oberen Teil einer Lenkwelle (15) drehbar lagert, wobei die Vorrichtung von einer Spannachse (18) durchgriffen wird, so dass über einen teleskopischen Eingriff der obere Teil der Lenkwelle (15) gegenüber einem unterem Teil (17) der Lenkwelle bewegt werden kann, so dass die Lenksäule insgesamt in ihrer Länge verstellbar ist.

12. Vorrichtung nach einem der vorhergehenden Ansprüche, **dadurch gekennzeichnet, dass** der Abstand (d) definiert ist durch den Abstand zwischen zwischen der Lasche (3a, 4a) und einer Hinterschneidung (3c, 4c) des Rasthakens (3b, 4b).

## Claims

1. Apparatus for guiding a body, comprising
- a first guide wall (1) and
- a second guide wall (2) which is arranged parallel to and at a distance from the first guide wall (1),
- wherein the first guide wall (1) and the second guide wall (2) are connected to one another by means of a first head piece (3) at one end in such a way that the guide walls (1, 2) and at least one head piece (3, 4) delimit a guide opening (10), wherein the guide opening is bordered by a substantially planar front end (8) on one side and by a rear end (9) on the other side, and
- wherein the guide walls (1, 2) have surfaces (6) which face one another, surround the circumference of the guide opening (10) and are directed inward with respect to the guide opening (10),
- having at least one lug (3a, 4a) oriented parallel to the plane of the front end (8) and with a material thickness (f) which supports a latching hook (3b, 4b), wherein the latching hook (3b, 4b) is at a distance (d) measured from the lug (3a, 4a), and therefore the distance of the latching hook (3b, 4b) from the front end (8) corresponds to the sum of the distance (d) and the material thickness (f) which is designed to secure the apparatus to a supporting part (13) by holding a wall of the supporting part (13), **characterized in that**
- the inwardly directed surfaces (6) of the guide walls (1, 2) each have a sliding area (7), wherein the distance of the sliding areas (7) from one another determines the clear width of the guide opening (10), and **in that**
- a distance (e) of the sliding areas (7) from the front end (8) is at least 75% of the abovementioned distance (d) of the latching hook (3b, 4b) from the front end (8).

2. Apparatus according to Claim 1, **characterized in that** the sliding areas (7) are at a constant distance from one another over their longitudinal extent, and therefore a body (12) which is guided between them is positively guided along the guide direction with constant friction.

3. Apparatus according to Claim 1 or Claim 2, **characterized in that** the guide walls (1, 2) are formed such that, in the event of loading perpendicular to the sliding areas (7), the loaded guide wall (1, 2) is elastically deformed outward away from the guided body (12) in the region of the sliding area (7).

4. Apparatus one of the preceding claims, **characterized in that** the width of the guide opening (10) at the front end (8) of the apparatus is greater than the width at the rear end (9), wherein the width of the rear end (9) of the apparatus is selected such that the surfaces (6) of the guide walls (1, 2), which surfaces are directed inward from the rear end (9), form the sliding areas (7), and wherein a transition region is provided between the width at the front end (8) and the width in the region of the sliding areas (7).

5. Apparatus according to Claim 4, **characterized in that** the surfaces (6) of the guide walls (1, 2), which surfaces are directed inward from the rear end (9) of the apparatus, have a recess (11) in the transition region.

6. Apparatus according to Claim 4 or 5, **characterized in that** the transition region is oriented parallel to the front end (8).

7. Apparatus according to one of the preceding claims, **characterized in that** the latching hooks (3b, 4b) are designed to clip the apparatus into the supporting part (13).

8. Apparatus according to Claim 5, **characterized in that** the distance (e) from the recess (11) as far as the front end (8) of the apparatus at least has a depth which corresponds to 75% of the distance (d) of the latching hook (3b, 4b) from the front end (8).

9. Apparatus according to Claim 4, **characterized in that** the transition region has a bevel (14) which extends as far as the front end (8) of the apparatus or of which the depth corresponds at least to 75% of the distance of the latching hook (3b, 4b) from the front end (8).

10. Apparatus according to one of the preceding claims, **characterized in that** the apparatus is part of a steering column of a motor vehicle.

11. Apparatus according to Claim 10, **characterized in that** the apparatus is held in a housing which rotatably mounts an upper part of a steering shaft (15), wherein a clamping axle (18) passes through the apparatus, and therefore the upper part of the steering shaft (15) can be moved with respect to a lower part (17) of the steering shaft by means of telescopic engagement, and therefore the steering column overall can be adjusted in respect of its length.

12. Apparatus according to one of the preceding claims, **characterized in that** the distance (d) is defined by the distance between between the lug (3a, 4a) and an undercut (3c, 4c) in the latching hook (3b, 4b).

## Revendications

1. Dispositif pour guider un corps, comportant
- une première paroi de guidage (1), et
- une deuxième paroi de guidage (2) qui est disposée parallèlement à la première paroi de guidage (1) et à une certaine distance de celle-ci,
- dans lequel la première paroi de guidage (1) et la deuxième paroi de guidage (2) sont reliées l'une à l'autre à une extrémité par l'intermédiaire d'un élément de tête (3) de manière à ce que les parois de guidage (1, 2) et au moins un élément de tête (3, 4) délimitent une ouverture de guidage (10), dans lequel l'ouverture de guidage est entourée d'une part par une face avant (8) sensiblement plane et d'autre part, par une face arrière (9), et
- dans lequel les parois de guidage (1, 2) présentent des surfaces (6) tournées l'une vers l'autre, entourant circonférentiellement l'ouverture de guidage (10) et orientées vers l'intérieur par rapport à l'ouverture de guidage (10),
- comportant au moins une patte (3a, 4a) orientée parallèlement au plan de la face avant (8), ayant une épaisseur de matériau (f) qui supporte un crochet d'encliquetage (3b, 4b), dans lequel le crochet d'encliquetage (3b, 4b) présente une distance (d) mesurée par rapport à la patte (3a, 4a), de manière à ce que la distance du crochet d'encliquetage (3b, 4b) par rapport à la face avant (8) corresponde à la somme de la distance (d) et de l'épaisseur de matériau (f), lequel crochet d'encliquetage est conçu pour fixer le dispositif sur une pièce de support (13) par réception d'une paroi de la pièce de support (13), **caractérisé en ce que**
- les surfaces (6) orientées vers l'intérieur des parois de guidage (1, 2) présentent respectivement une surface de glissement (7), dans lequel la distance des surfaces de glissement (7) l'une par rapport à l'autre détermine la largeur intérieure de l'ouverture de guidage (10), et **en ce que**
- une distance (e) entre les surfaces de glissement (7) et la face avant (8) présente au moins 75 % de la distance (d) précitée entre le crochet d'encliquetage (3b, 4b) et la face avant (8).

2. Dispositif selon la revendication 1, **caractérisé en ce que** les surfaces de glissement (7) présentent une distance constante l'une par rapport à l'autre sur leur extension longitudinale, de manière à ce qu'un corps (12) guidé entre celles-ci soit guidé de manière forcée avec un frottement constant dans la direction de guidage.

3. Dispositif selon la revendication 1 ou la revendication 2, **caractérisé en ce que** les parois de guidage (1, 2) sont réalisées de manière à ce que, lors de l'application d'une charge perpendiculairement aux surfaces de glissement (7), la paroi de guidage (1, 2) soumise à la charge soit déformée vers l'extérieur par rapport au corps (12) guidé dans la zone de la surface de glissement (7).

4. Dispositif l'une quelconque des revendications précédentes, **caractérisé en ce que** la largeur de l'ouverture de guidage (10) au niveau de la face avant (8) du dispositif est supérieure à la largeur au niveau de la face arrière (9), dans lequel la largeur de la face arrière (9) du dispositif est sélectionnée de manière à ce que les surfaces (6) des parois de guidage (1, 2) orientées vers l'intérieur depuis la face arrière (9) forment les surfaces de glissement (7) et dans lequel il est prévu une zone de transition entre la largeur au niveau de la face arrière (8) et la largeur dans la zone des surfaces de glissement (7).

5. Dispositif selon la revendication 4, **caractérisé en ce que** les surfaces (6) des parois de guidage (1, 2), orientées vers l'intérieur depuis la face arrière (9) du dispositif, présentent un retrait (11) dans la zone de transition.

6. Dispositif selon la revendication 4 ou 5, **caractérisé en ce que** la zone de transition est orientée parallèlement à la face avant (8).

7. Dispositif selon l'une quelconque des revendications précédentes, **caractérisé en ce que** les crochets d'encliquetage (3b, 4b) sont conçus pour encliqueter le dispositif dans la pièce de support (13).

8. Dispositif selon la revendication 5, **caractérisé en ce que** la distance (e) du retrait (11) à la face avant (8) du dispositif présente au moins une profondeur qui correspond à 75 % de la distance (d) du crochet d'encliquetage (3b, 4b) à la face avant (8).

9. Dispositif selon la revendication 4, **caractérisé en ce que** la zone de transition présente un chanfrein (14) qui s'étend jusqu'à la face avant (8) du dispositif ou dont la profondeur correspond à au moins 75 % de la distance du crochet d'encliquetage (3b, 4b) à la face avant (8).

10. Dispositif selon l'une quelconque des revendications précédentes, **caractérisé en ce que** le dispositif fait partie d'une colonne de direction d'un véhicule.

11. Dispositif selon la revendication 10, **caractérisé en ce que** le dispositif est logé dans un boîtier qui supporte de manière rotative une partie supérieure d'un arbre de direction (15), dans lequel le dispositif est traversé par un axe de serrage (18) de manière à ce que la partie supérieure de l'arbre de direction (15) puisse être déplacée par rapport à une partie inférieure (17) de l'arbre de direction par l'intermédiaire d'un emboîtement télescopique, afin que la colonne de direction puisse être ajustée en longueur dans son ensemble.

12. Dispositif selon l'une quelconque des revendications précédentes, **caractérisé en ce que** la distance (d) est définie par la distance entre entre la patte (3a, 4a) et une contre-dépouille (3c, 4c) du crochet d'encliquetage (3b, 4b).
